# EUROPEAN PATENT APPLICATION

(11) **EP 4 790 679 A2**
(43) Date of publication of application: **12.08.2026**
(21) Application number: 26151803.9
(22) Date of filing: 14.01.2026
(51) Int. Cl.: G08B 17/107, G08B 29/14, G08B 29/18

(54) **EVENT MONITORING AND DETECTION DEVICE TESTING**

(30) Priority: 05.02.2025 US 202519045861
(71) Applicant: Honeywell International Inc., Charlotte, NC 28202 (US)
(72) Inventor: WOLF, Benjamin Henry, Charlotte, 28202 (US); BARSON, Michael, Charlotte, 28202 (US); DEARDEN, Christopher, Charlotte, 28202 (US)
(74) Representative: Haseltine Lake Kempner LLP

(57) **Abstract**

Devices, methods, and systems for event monitoring and detection device testing are described herein. One device includes a memory and a processor to execute instructions stored in the memory to operate a sensor of the event monitoring and detection device at a first sensitivity level, operate the sensor of the event monitoring and detection device at a second sensitivity level, and return the sensor of the event monitoring and detection device to the first sensitivity level.

## Description

### Technical Field

The present disclosure relates generally to devices, methods, and systems for event monitoring and detection device testing.

### Background

Large facilities (e.g., buildings), such as commercial facilities, office buildings, hospitals, and the like, may have an alarm system that can be triggered during an emergency situation (e.g., a fire) to warn occupants to evacuate. For example, an alarm system may include a control panel and a plurality of event monitoring and detection devices located throughout the facility (e.g., on different floors and/or in different rooms of the facility) that can sense an event occurring in the facility and provide a notification of the event to the occupants of the facility via alarms.

### Brief Description of the Drawings

Figure 1 illustrates a block diagram of an event monitoring and detection device in accordance with one or more embodiments of the present disclosure.
Figure 2 illustrates a system for event monitoring and detection device testing in accordance with an embodiment of the present disclosure.
Figure 3A illustrates a portion of an event monitoring and detection device masked by a solid object in accordance with one or more embodiments of the present disclosure.
Figure 3B illustrates a portion of an event monitoring and detection device masked by an aerosol in accordance with one or more embodiments of the present disclosure.
Figure 4 illustrates a block diagram of an alarm system in accordance with one or more embodiments of the present disclosure.
Figure 5 is an example of a controller for event monitoring and detection device testing, in accordance with one or more embodiments of the present disclosure.

### Detailed Description

Devices, methods, and systems for event monitoring and detection device testing are described herein. One device includes a memory and a processor to execute instructions stored in the memory to operate a sensor of the event monitoring and detection device at a first sensitivity level, operate the sensor of the event monitoring and detection device at a second sensitivity level, and return the sensor of the event monitoring and detection device to the first sensitivity level.

The demand for unobtrusive "flush fit" open chamber event monitoring and detection devices (sometimes referred to herein simply as "smoke detectors," "detectors," or "devices") continues to grow as architects desire cleaner, sleeker looks inside buildings. As opposed to closed chamber designs, open chamber detectors have a detection chamber that is open to the surrounding air. Open chamber event monitoring and detection devices are discussed in U.S. Patent No. 8,624,745, filed on March 16, 2011, the entirety of which is incorporated by reference herein.

However, testing the functionality of these types of detectors presents challenges. Aerosols can be costly and time consuming, and may only allow for checking the positive functioning of the device on an infrequent (e.g., annual) basis.

Self-test modules may be used to test detectors, but these are limited by their demand for very particular airspeeds and use undesirably large quantities of aerosols. With self-test modules, checks for masking can only be performed periodically because there is a finite amount of wax for burning. Additionally, a fire panel associated with detectors using self-test modules has to be placed into a service mode because the alarm threshold is exceeded in order to prove a functional test. This involves a technician being on site and prevents testing from being carried out in the background.

Being able to periodically check the correct functioning of detectors has significant value. Embodiments of the present disclosure allow detectors to prove their correct functioning and give building owners the reassurance that detectors, and the larger system, are working as they should. Additionally, as an ongoing portion of testing, embodiments of the present disclosure can, through their normal operation, determine whether a detector is masked. As referred to herein, "masking" occurs when a detector is physically blocked in some manner. Masking can occur accidentally or because of intentional human tampering. In some cases, a detector can be masked by a solid object (e.g., tape or a plastic bag). In some cases, a detector can be masked by an aerosol or a liquid (e.g., spray paint). Embodiments herein can provide a notification in the event of a masked detector so that appropriate corrective action can be taken.

Commonly, detectors are operated at a sensitivity calibrated to detect smoke particles, which may, for example, range from 0.4 to .07 micrometers in diameter. To test their functionality, detectors in accordance with embodiments herein can temporarily enter a mode of increased sensitivity calibrated to detect fine particulates (e.g., particles that are 2.5 micrometers or less in diameter, referred to herein as PM2.5 particulate matter) in normal ambient air. If these particulates are detected in the increased sensitivity mode, then it can be concluded that the detector is functional in its normal operating mode. In contrast with previous approaches that involve infrequently (e.g., annually) having on-site technicians take fire panel(s) offline, embodiments of the present disclosure can perform function testing rapidly and with much greater frequency (e.g., daily or hourly).

As previously discussed, embodiments of the present disclosure can detect masking. For example, a detector in accordance with embodiments herein can utilize light-emitting diodes (LEDs) to create both a beam path and a scatter path, each detectable by a photodetector. If the signal associated with the beam path reduces in strength, embodiments herein can determine the presence of a masking condition as the beam is at least partially blocked. If the signal associated with the scatter path increases in strength, embodiments herein can determine the presence of a masking condition as the light of the scatter path is being reflected by one or more foreign objects.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

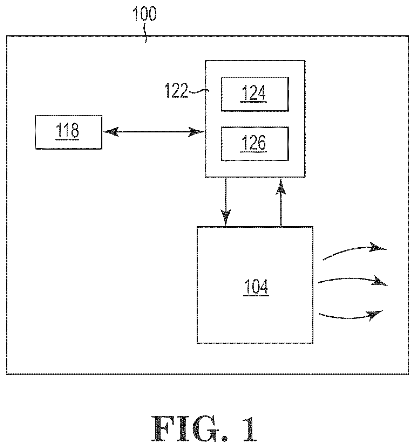

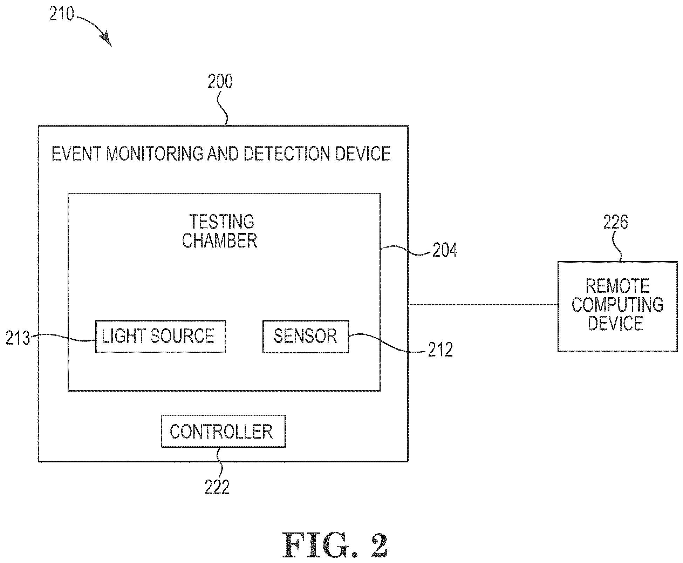

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1, and a similar element may be referenced as 204 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 illustrates a block diagram of an event monitoring and detection device 100 in accordance with one or more embodiments of the present disclosure. The event monitoring and detection device 100 can include a controller (e.g., microcontroller) 122, a sounder 118, and a testing chamber 104.

The controller 122 can include a memory 124 and a processor 126. Memory 124 can be any type of storage medium that can be accessed by processor 126 to perform various examples of the present disclosure. For example, memory 124 can be a non-transitory computer readable medium having computer readable instructions (e.g., computer program instructions) stored thereon that are executable by processor 126 for event monitoring and detection device testing in accordance with the present disclosure. For instance, processor 126 can execute the executable instructions stored in memory 124 to operate a sensor of the event monitoring and detection device at a first sensitivity level, operate the sensor of the event monitoring and detection device at a second sensitivity level, and return the sensor of the event monitoring and detection device to the first sensitivity level.

Figure 2 illustrates a system 210 for event monitoring and detection device testing in accordance with an embodiment of the present disclosure. The system 210 can include an event monitoring and detection device 400 and a remote computing device 426.

The event monitoring and detection device 200 can correspond to the event monitoring and detection device 100 of Figure 1 and can be, but is not limited to, a fire and/or smoke detector of a fire control system.

An event monitoring and detection device 200 can sense an event, such as a fire, occurring in a facility and trigger a response to provide a notification of the event to occupants of the facility. An event response can include visual and/or audio alarms, for example. An event response can also notify emergency services (e.g., fire departments, police departments, etc.). In some examples, a plurality of event monitoring and detection devices can be located throughout a facility (e.g., on different floors and/or in different rooms of the facility).

As shown in Figure 2, the event monitoring and detection device 200 can include a testing chamber 204. The testing chamber 204 can be, for instance, an optical scatter chamber. In some embodiments, the testing chamber is an open chamber. The testing chamber 204 can include a light source (e.g., at least one light emitting diode (LED)) 213 and a sensor 212. In some embodiments, the sensor 212 is a photosensitive light receiver (e.g., photodiode, photoresistor, phototransistor, photovoltaic light sensor, etc.) that can measure a value associated with received light and produce a signal associated with the measured value. For example, the testing chamber 204 can pulse the light source 213 to measure whether any particulate matter (e.g., smoke, PM2.5, etc.) is present in the testing chamber 204. In some embodiments, the sensor 212 includes a photodiode array. The photodiode array can include a first portion and a second portion. In some embodiments, the first portion is positioned at a first angle, and the second portion is positioned at a second angle. In some embodiments, the first portion is configured to receive a first wavelength (or first range of wavelengths) of light, and the second portion is configured to receive a second wavelength (or second range of wavelengths) of light.

The sensor 212 can take the environmental particulate matter reading by pulsing the light source 213, and capturing the light pulses by the sensor 212. The captured light pulses can be utilized to estimate particle sizes of the particulates and quantities of the particulates based on distributions of light scattering intensities from individual particles in the air of the testing chamber 204. Signals indicative of the distributions of light scattering intensities can be produced by the sensor 212 and included as data in the environmental particulate matter reading.

The sensor 212 can include a sensitivity level that is variable. As used herein, the term "sensitivity level" refers to an input parameter change that is required to produce a standardized output change. For example, the sensor 212 can have a first sensitivity level and a second sensitivity level, where the second sensitivity level is more sensitive than the first sensitivity level. The first sensitivity level can be, for instance, a normal operating sensitivity level for the sensor 412 in order to detect an event during normal operating conditions. In some embodiments, the first sensitivity level is configured to detect smoke particles. For example, the first sensitivity level can be 0.2 percent obscuration per meter (%OPM).

In some embodiments, the second sensitivity level is configured to detect particulate matter in air that does not contain smoke. For example, particulate matter in air without smoke may include PM2.5 particulate matter. In some embodiments, the second sensitivity level is at least 90 times more sensitive than the first sensitivity level. For example, the second sensitivity level can be 20 %OPM. It is noted that the sensor 212 is not limited to just two sensitivity levels. For instance, the sensor 212 can include more than two sensitivity levels.

As mentioned above, the event monitoring and detection device 200 can cause a sensor to take an environmental particulate matter reading for the environment surrounding the device 200. Such a reading can take place during a normal operational mode of the device 200. For example, during normal operational mode of the device 200, the environmental particulate matter reading can be taken while the device 200 is further listening for other events (e.g., fire detection).

The sensor 212 can operate at the first sensitivity level and the controller 222 can determine, based on the signal produced by the sensor 212, whether an event such as a fire is occurring near the device 200. For example, if the signal exceeds an alarm threshold, the device 200 can transmit a signal indicating an event (e.g., a fire) is occurring. However, if the signal does not exceed an alarm threshold, the controller 222 can determine no event is occurring.

In order to test the functionality of the device 200, the sensor 212 can transition to operate (e.g., temporarily operate) at the second sensitivity level to test whether it can detect fine particulate matter in normal ambient (e.g., non-smoke) air. In some embodiments, the sensor 212 is, after a predetermined period of time, returned to the first sensitivity level. The period of time that the sensor operates at the second sensitivity level is configurable. In some embodiments, the period of time is five seconds, though embodiments herein are not limited to a particular period of time for testing purposes. The frequency at which the sensor 212 is operated at the second sensitivity level and returned to the first sensitivity level can be scheduled and/or user configurable.

In some embodiments, only if particulate matter is detected by the sensor 212 during operation at the second sensitivity level, the controller 222 causes the sensor 212 to return the first sensitivity level. In some embodiments, the controller 222 can bin the particles detected by the sensor 212 while or after it operates at the second sensitivity level to determine a binned sample. The binned sample can be compared to one or more reference (e.g., known, target, and/or historical) binned samples to verify that the sensor 212 is operating properly. In some embodiments, if the binned sample is determined to be within a threshold similarity to the reference binned sample, then the sensor 112 can be determined to be functioning properly. The present disclosure is not intended to limit the size(s) and/or quantity of the bins utilized in such binning.

In some embodiments, a notification indicating that the device 200 is functioning properly may be provided (e.g., via the remote computing device 226) if particulate matter is detected by the sensor 212 during operation at the second sensitivity level. If, however, no particulate matter is detected by the sensor 212 during operation at the second sensitivity level, a notification (e.g., an alert) indicating that the device 200 is not functioning properly may be provided (e.g., via the remote computing device 226).

The controller 222 can cause the sensor 212 to repeatedly operate at the second sensitivity level and return the sensor 212 to the first sensitivity level according to a particular interval. In some embodiments, such testing is performed hourly. In some embodiments, such testing is performed daily. Additionally, in some embodiments, the above testing procedure can be performed in response to an input. For example, in response to a user input (e.g., to the remote computing device 226, to a mobile device not illustrated in Figure 2, to a control panel, etc.), the above testing procedure can be performed. Such an approach can allow for "on-demand" testing of the device 200.

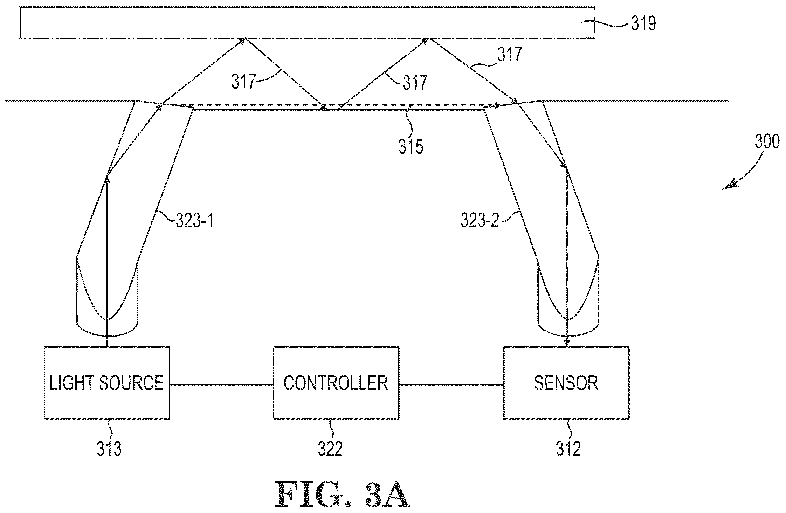

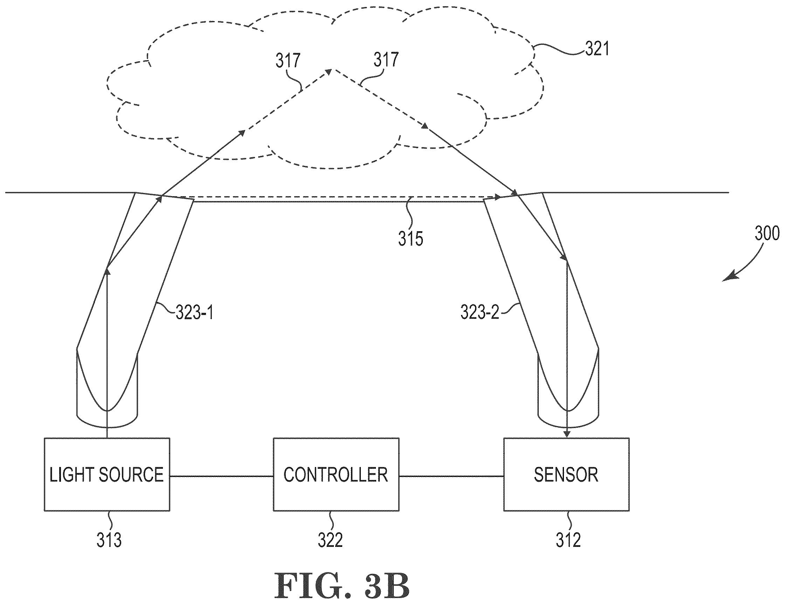

As mentioned above, the device 200 can additionally determine whether the testing chamber 204 is masked (e.g., blocked) via an anti-mask test, which is described in more detail in connection with Figure 3.

Figure 3A illustrates a portion of an event monitoring and detection device 300 masked by a solid object 319 in accordance with one or more embodiments of the present disclosure. Figure 3B illustrates a portion of an event monitoring and detection device 300 masked by an aerosol 321 in accordance with one or more embodiments of the present disclosure. In some instances Figure 3A and Figure 3B are referred to cumulatively as "Figure 3." As illustrated in Figure 3, the device 300 includes a light source 313 configured to emit a beam of light 315 via an optical element 322-1. The optical element 323 can be a total internal reflection (TIR) optical element (e.g., a light pipe). After exiting the optical element 323-1, the beam 315 can take a direct path along a surface hollow of the chamber and enter a second optical element 323-2, ultimately reaching the sensor 312. The sensor 312 can produce a first signal associated with the beam 315.

A portion of the beam 315 does not take a direct path to the second optical element 323-2. For instance, as shown in Figure 3, a portion 317 of the beam of light can be scattered after reflecting off of a solid masking object 319 (as illustrated in Figure 3A) and/or an aerosol 321 (as illustrated in Figure 3B). The scattered portion 317 can enter the second optical element 323-2, ultimately reaching the sensor 312. The sensor 312 can produce a second signal associated with the scattered portion 317.

The controller 322 can receive each of the first signal and the second signal from the sensor 312. A decrease in the first signal (e.g., a decrease that exceeds a decrease threshold) is indicative of a mask. An increase in the second signal (e.g., an increase that exceeds an increase threshold) is indicative of a mask. If either the decrease threshold or the increase threshold is exceeded, the controller can cause a notification to be provided (e.g., via a remote computing device, not shown in Figure 3). As previously discussed, the sensor 312 can include a photodiode array, which can include a first portion and a second portion. In some embodiments, the first portion is positioned at a first angle, and the second portion is positioned at a second angle. In some embodiments, the first portion is configured to receive a first wavelength (or first range of wavelengths) of light, and the second portion is configured to receive a second wavelength (or second range of wavelengths) of light. In some embodiments, the second portion can be dedicated to the anti-mask/anti-cloaking determination illustrated in Figure 3, for instance.

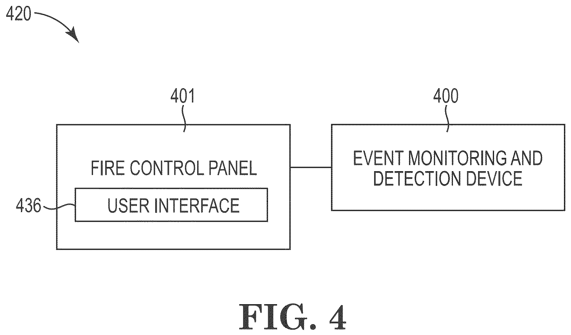

Figure 4 illustrates a block diagram of an alarm system 420 in accordance with one or more embodiments of the present disclosure. The alarm system 420 can include an event monitoring and detection device 400 and a fire control panel 401. The event monitoring and detection device 400 can be, for example, event monitoring and detection device 100, 200, and/or 300 previously described in connection with Figures 1, 2, and 3, respectively.

The fire control panel 401 can be a monitoring device, a fire detection control system, and/or a cloud computing device of the alarm system 420. The fire control panel 401 can be configured to send commands to and/or receive reports from an event monitoring and detection device 400 via a wired or wireless network. For example, the event monitoring and detection device 400 can report a sensor reading during a self-test procedure of the event monitoring and detection device 400. Additionally, in some examples the event monitoring and detection device 400 can report a confirmed event to the fire control panel 401 responsive to a measured value after a particular period of time being greater than a threshold value.

The fire control panel 401 can receive reports from a number of event monitoring and detection devices analogous to event monitoring and detection device 400. For example, the fire control panel 401 can receive reports from each of a number of event monitoring and detection devices analogous to event monitoring and detection device 400 and transmit commands based on the reports from each of the number of event monitoring and detection devices.

In a number of embodiments, the fire control panel 401 can include a user interface 436. The user interface 436 can be a GUI that can provide and/or receive information to and/or from a user and/or the event monitoring and detection device 400. The user interface 436 can display messages and/or data received from the event monitoring and detection device 400. For example, the user interface 436 can alert a user to an unconfirmed event, a confirmed event, and/or a false alarm reported by the event monitoring and detection device 400.

The networks described herein can be a network relationship through which event monitoring and detection device 400 and/or fire control panel 401 can communicate with each other. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, the network can include a number of servers that receive information from and transmit information to event monitoring and detection device 400 and/or fire control panel 301 via a wired or wireless network.

As used herein, a "network" can provide a communication system that directly or indirectly links two or more computers and/or peripheral devices and allows a fire control panel to access data and/or resources on an event monitoring and detection device 400 and vice versa. A network can allow users to share resources on their own systems with other network users and to access information on centrally located systems or on systems that are located at remote locations. For example, a network can tie a number of computing devices together to form a distributed control network (e.g., cloud).

A network may provide connections to the Internet and/or to the networks of other entities (e.g., organizations, institutions, etc.). Users may interact with network-enabled software applications to make a network request, such as to get data. Applications may also communicate with network management software, which can interact with network hardware to transmit information between devices on the network.

In some examples, the network can be used by the event monitoring and detection device 400 and/or the fire control panel 401 to communicate with a remote computing device. The remote computing device can be a personal laptop computer, a desktop computer, a mobile device such as a smart phone, a tablet, a wrist-worn device, and/or redundant combinations thereof, among other types of computing devices. The remote computing device can receive reports from a number of event monitoring and detection devices analogous to event monitoring and detection device 400 and/or a number of fire control panels analogous to fire control panel 401 and transmit commands based on the reports to one or more of the number of event monitoring and detection devices and/or one or more of the number of fire control panels.

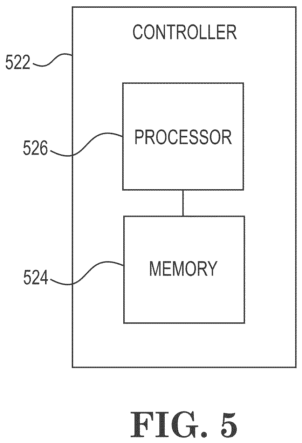

Figure 5 is an example of a controller 522 for event monitoring and detection device testing, in accordance with one or more embodiments of the present disclosure. As illustrated in Figure 5, the controller 522 can include a memory 524 and a processor 526 for event monitoring and detection device testing, in accordance with the present disclosure.

The memory 524 can be any type of storage medium that can be accessed by the processor 526 to perform various examples of the present disclosure. For example, the memory 524 can be a non-transitory computer readable medium having computer readable instructions (e.g., executable instructions/computer program instructions) stored thereon that are executable by the processor 526 for event monitoring and detection device testing in accordance with the present disclosure.

The memory 524 can be volatile or nonvolatile memory. The memory 524 can also be removable (e.g., portable) memory, or non-removable (e.g., internal) memory. For example, the memory 524 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 524 is illustrated as being located within controller 522, embodiments of the present disclosure are not so limited. For example, memory 524 can also be located internal to another computing resource (e.g., enabling computer readable instructions to be downloaded over the Internet or another wired or wireless connection).

The processor 526 may be a central processing unit (CPU), a semiconductor-based microprocessor, and/or other hardware devices suitable for retrieval and execution of machine-readable instructions stored in the memory 524.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A controller (122, 222, 522) for an event monitoring and detection device (100, 200, 300, 400), comprising:
a memory (124, 524); and
a processor (126, 526) configured to execute executable instructions stored in the memory to:
operate a sensor (212, 312) of the event monitoring and detection device at a first sensitivity level;
operate the sensor of the event monitoring and detection device at a second sensitivity level; and
return the sensor of the event monitoring and detection device to the first sensitivity level.

2. The controller of claim 1, wherein the second sensitivity level is more sensitive than the first sensitivity level.

3. The controller of claim 1, wherein the second sensitivity level is at least 90 times more sensitive than the first sensitivity level.

4. The controller of claim 1, wherein the first sensitivity level is configured to detect smoke particles.

5. The controller of claim 1, wherein the second sensitivity level is configured to detect particulate matter in air without smoke.

6. The controller of claim 5, wherein the particulate matter in air without smoke includes PM2.5 particulate matter.

7. The controller of any one of claims 1-6, including instructions to return the sensor to the first sensitivity level responsive to detecting particulate matter during operation at the second sensitivity level.

8. The controller of any one of claims 1-6, including instructions to repeatedly operate the sensor of the event monitoring and detection device at the second sensitivity level and return the sensor of the event monitoring and detection device to the first sensitivity level according to a particular interval.

9. The controller of any one of claims 1-6, including instructions to:
bin particulate matter detected during operation at the second sensitivity level to produce a binned sample; and
return the sensor to the first sensitivity level responsive to a comparison of the binned sample to a reference bin sample .

10. The controller of any one of claims 1-6, including instructions to:
receive a first signal and a second signal produced by the sensor during operation at the first sensitivity level, wherein the first signal is associated with a beam of light (315), and wherein the second signal is associated with a scattered portion (317) of the beam of light; and
provide a notification responsive to:
a decrease in the first signal that exceeds a decrease threshold; and/or
an increase in the second signal that exceeds an increase threshold.

11. An event monitoring and detection device (100, 200, 300, 400), comprising:
a light source (213, 313) configured to emit a beam of light (315);
a sensor (212, 312) configured to:
receive the beam of light and produce a first signal associated with the beam of light; and
receive a scattered portion (317) of the beam of light and produce a second signal associated with the scattered portion; and
a controller (122, 222, 522) configured to provide a notification responsive to:
a decrease in the first signal that exceeds a decrease threshold; and/or
an increase in the second signal that exceeds an increase threshold.

12. The device of claim 11, wherein the controller is configured to:
operate a portion of the sensor at a first sensitivity level;
temporarily operate the portion of the sensor at a second sensitivity level; and
return the portion of the sensor to the first sensitivity level after detecting PM2.5 particulate matter during operation at the second sensitivity level.

13. The device of claim 12, wherein the controller is configured to temporarily operate the portion of the sensor at the second sensitivity level according to a user-configurable schedule.

14. The device of any one of claims 11-13, wherein the controller is configured to transmit the notification to a remote computing device (226).

15. The device of any one of claims 11-13, wherein the notification indicates that the event monitoring and detection device is masked.
